Europäisches Patentamt

European Patent Office

Office européen des brevets

(19)

(11) **EP 0 741 345 B1**

(12) **EUROPÄISCHE PATENTSCHRIFT**

(45) Veröffentlichungstag und Bekanntmachung des
Hinweises auf die Patenterteilung:
**06.03.2002 Patentblatt 2002/10**

(51) Int Cl.7: **G05B 13/02**, G05B 21/02,
G05D 23/19, F25B 49/04

(21) Anmeldenummer: **96106969.7**

(22) Anmeldetag: **03.05.1996**

(54) **Verfahren und Vorrichtung zur Regelung eines Prozesses**

Method and device for controlling a process

Méthode et dispositif de contrôle d'un procédé

(84) Benannte Vertragsstaaten:
**AT BE CH DE DK ES FI FR GB GR IE IT LI LU MC
NL PT SE**

(30) Priorität: **05.05.1995 DE 19516627**

(43) Veröffentlichungstag der Anmeldung:
**06.11.1996 Patentblatt 1996/45**

(73) Patentinhaber: **Ranco Incorporated of Delaware
Wilmington, Delaware 19801 (US)**

(72) Erfinder:
• **Bailey, Graham
67141 Neuhofen (DE)**

• **Heger, Helmut
68789 St. Leon-Rot (DE)**

(74) Vertreter:
**Ritter und Edler von Fischern, Bernhard,
Dipl.-Ing. et al
Hoffmann Eitle, Patent- und Rechtsanwälte,
Arabellastrasse 4
81925 München (DE)**

(56) Entgegenhaltungen:
**EP-A- 0 091 382         DE-A- 2 905 525
DE-A- 3 535 787         FR-A- 2 617 615
GB-A- 2 068 596         US-A- 3 880 352
US-A- 5 272 621**

**Beschreibung**

Die vorliegende Erfindung betrifft ein Verfahren zum Regeln einer Ausgangsgröße eines Prozesses sowie eine Vorrichtung zur Durchführung eines solchen Verfahrens gemäß dem Oberbegriff des Anspruches 1 bzw. 18. Ein derartiges Verfahren bzw. Vorrichtung sind bekannt aus DE 29 05 525. Das erfindungsgemäße Verfahren bzw. die erfindungsgemäße Vorrichtung finden beispielsweise Anwendung bei der Regelung der Innenraumtemperatur eines Absorberkühlschrankes.

Ein Prozeß weist im allgemeinen eine Ausgangsgröße auf, welche über eine Eingangsgröße des Prozesses beeinflußbar ist. Der Begriff "Prozeß" steht dabei für jede Art von Regelstrecke, beispielsweise einen Verbrennungsmotor, Elektromotor, ein Kühlaggregat oder einen Kühlschrank, für chemische Prozesse, usw. Der Begriff "Stellgröße" bezieht sich dabei auf physikalische Größen, welche unmittelbar verändert werden können, um auf diese Weise eine mittelbare Änderung einer Ausgangsgröße des Prozesses herbeizuführen. Der Begriff "Ausgangsgröße" steht für eine physikalische Größe, welche nicht unmittelbar beeinflußt wird, sondern über eine Veränderung der Stellgröße. Für den Fall des Verbrennungsmotors sind mögliche Stellgrößen etwa die Drosselklappenstellung oder die Kraftstoffeinspritzmenge, während die Ausgangsgröße die Drehzahl, das Drehmoment oder die abgegebene Leistung ist. Im Fall des Absorberkühlschrankes ist die Stellgröße etwa die dem Kocher des Absorptionskühlaggregates zugeführte Wärme- oder elektrische Leistung, während die Ausgangsgröße beispielsweise die Innenraumtemperatur des Kühlschrankes ist.

Prozesse der Art, auf welche sich die vorliegende Erfindung bezieht, unterliegen allgemein dem Einfluß von Störgrößen, welche auf die Ausgangsgröße des Prozesses einwirken. Der Einfluß von Störgrößen erschwert die mittelbare Steuerung der Ausgangsgröße über die Stellgröße oder macht eine solche Steuerung unmöglich. Beispiele für Störgrößen sind etwa im Fall des Verbrennungsmotors Druck-, Temperatur- und Feuchtigkeitsänderungen der Ansaugluft, Änderungen der Motortemperatur, usw. Im Falle eines Kühlschrankes haben beispielsweise beim Öffnen des Kühlraumes eindringende, wärmere Luft, Schwankungen der Umgebungstemperatur, usw. einen störenden Einfluß auf die Innenraumtemperatur.

Um die Ausgangsgröße (Istwert X) eines Prozesses einem Sollwert w nachzuführen und den Einfluß von Störgrößen zu minimieren, ist es seit langem bekannt, eine Rückführungsregelung zu verwenden, welche aus der Abweichung (w-X) der Ausgangsgröße von dem eingestellten Sollwert w, d.h., aus der Sollwertabweichung, eine Stellgröße Y erzeugt, um die Sollwertabweichung zu minimieren und somit die Ausgangsgröße (den Istwert) der Sollwertvorgabe so gut wie möglich nachzuführen. Dabei ist es wünschenswert, ein Regelverhalten zu erzielen, welches eine möglichst schnelle Reaktion der Ausgangsgröße auf eine Veränderung der Sollwertvorgabe hin erlaubt, möglichst geringe, schnell abklingende Regelschwingungen zeigt, und Störgrößeneinflüsse wirksam ausregelt.

Je größer die Zeit ist, die verstreicht, bevor die Ausgangsgröße des Prozesses auf eine Veränderung der Stellgröße reagiert, d.h. je größer die Totzeit des Prozesses ist, und je langsamer sich die Ausgangsgröße des Prozesses nach Verstreichen der Totzeit ihrem stationären Wert annähert, d.h. je größer die Verzögerungszeit des Prozesses ist, desto schwieriger ist es, die oben genannten Anforderungen in zufriedenstellender Weise zu erfüllen. Beispielsweise zeigt die Innenraumtemperatur eines Absorberkühlschrankes ein solches Verhalten, d.h. große Totzeiten und Verzögerungszeiten. Die Ausgangsgröße Innenraumtemperatur reagiert nur sehr indirekt auf eine Veränderung der dem Kocher des Absorptionskühlaggregates zugeführten Leistung, die hier die Stellgröße ist.

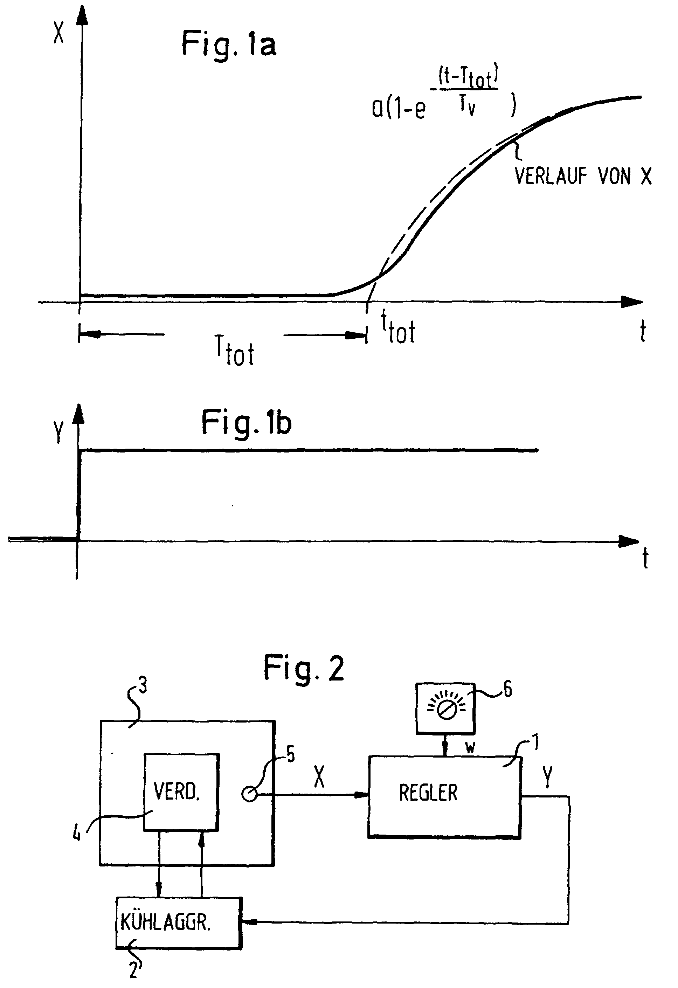

Zur Erläuterung der Begriffe "Totzeit" und "Verzögerungszeit" zeigt Figur 1 ein Beispiel der Ausgangsgröße eines Prozesses für den Fall, daß die Stellgröße im Zeitpunkt t=0 einen Sprung vollzieht. Der sich ergebende Verlauf der Ausgangsgröße des Prozesses läßt sich näherungsweise beschreiben durch eine erste Phase während des Intervalls t=0 bis t=$t_{tot}$, innerhalb welcher Phase keine nennenswerte Änderung der Ausgangsgröße X eintritt. Erst nach Verstreichen des Intervalls $T_{tot}$ setzt eine Bewegung der Ausgangsgröße X in Richtung eines neuen stationären Wertes der Ausgangsgröße bei nach dem Sprung unverändert gehaltenem Sollwert ein. Der Verlauf der Ausgangsgröße X in dieser zweiten Phase läßt sich zum Beispiel näherungsweise modellieren durch die Gleichung X (t) = a • $(1 - \exp(-\frac{t - T_{tot}}{T}))$. Der in diesem Modell auftretende Prozessparameter $T_v$ stellt die Verzögerungszeit des Prozesses dar und ist ein Maß für die Annäherungsgeschwindigkeit der Ausgangsgröße y an ihren stationären Wert a. Insbesondere bei nicht linearen Prozessen, welche in der Realität überwiegend anzutreffend sind, stellt dieses Modell allerdings keine vollständige und exakte Prozessbeschreibung dar, und die Erfindung ist nicht auf die Regelung derartig modellierbarer Prozesse beschränkt.

Aufgabe der vorliegenden Erfindung ist es, ein Verfahren und eine Vorrichtung zum Regeln einer Ausgangsgröße eines Prozesses zu geben, welcher große Totzeiten $T_{tot}$ und große Verzögerungszeiten $T_v$ aufweist, so, daß die Ausgangsgröße sowohl ein gutes Führungsverhalten bei Sollwertänderungen zeigt, als auch Störgrößeneinflüsse schnell und mit geringem Überschwingen ausgeregelt werden können.

Diese Aufgabe wird erfindungsgemäß gelöst wie in den Patentansprüchen 1 und 18 angegeben.

Gemäß dem Verfahren nach der vorliegenden Erfindung wird in einer Aktivitätsphase des Reglungsvorganges eine aktuelle Stellgröße berechnet. An diese Aktivitätsphase schließt sich eine Inaktivitätsphase an, innerhalb welcher die Stellgröße nicht geändert wird. An die Inaktivitätsphase schließt sich dann die nächste Aktivitätsphase des Reglers an. Am Ende jeder Aktivitätsphase steht eine neu berechnete Stellgröße zur Verfügung. Erfindungsgemäß ist die Dauer, während welcher die Stellgröße unverändert bleibt, beziehungsweise die Dauer der Inaktivitätsphase, variabel. Bevorzugt geht der Verlauf der Stellgröße in die Dauer zwischen den Berechnungen von Stellgrößen ein. Bevorzugt hängt diese Dauer vom Betrag der Differenz zwischen der aktuell berechneten Stellgröße und einer in einer vorangehenden Aktivitätsphase berechneten Stellgröße ab, wobei die vorangehend berechnete Stellgröße bevorzugt die in der der aktuellen Aktivitätsphase unmittelbar vorangehenden Aktivitätsphase berechnete Stellgröße ist. Durch die Veränderung dieser Dauer, während welcher sich die Stellgröße nicht ändert, ist es möglich, gleichzeitig gutes Führungsverhalten und ebenfalls gutes Regelverhalten zu erzielen, so daß die Ausgangsgröße Sollwertsprüngen schnell folgt und dennoch geringes Überschwingen zeigt.

Der erfindungsgemäße Regler weist einen Speicher für eine früher berechnete Stellgröße auf, sowie eine Einrichtung zum Berechnen der Differenz zwischen der gespeicherten, früheren Stellgröße und der aktuell berechneten Stellgröße. Der Regler umfaßt ferner einen Zeitgeber, welcher die Dauer zwischen aufeinanderfolgenden Stellgrößen und somit die Abfolge von Aktivitäts- und Inaktivitätsphasen des Reglers steuert. Der Zeitgeber empfängt die Differenz zwischen früherer und aktuell berechneter Stellgröße und variiert die Wartezeit bis zur nächsten Stellgrößenberechnung entsprechend. Bevorzugt werden beispielsweise die Funktionen der Berechnung einer aktuellen Stellgröße und die Zeitgeberfunktion von einem Mikroprozessor durchgeführt.

Bevorzugte Ausführungsbeispiele der vorliegenden Erfindung ergeben sich aus den Unteransprüchen.

Bevorzugt weist die Wartezeit zwischen der aktuellen Stellgrößenberechnung und der nächsten Stellgrößenberechnung eine monoton steigende Abhängigkeit vom Betrag der Differenz zwischen der aktuell berechneten Stellgröße und der unmittelbar vorangehend berechneten Stellgröße auf. Beispielsweise sind für die Wartezeit zwei unterschiedlich lange Zeitdauern vorgesehen, und die kürzere Wartezeit wird für den Fall gewählt, daß der Unterschied zwischen aktueller und vorangehender Stellgröße kleiner als ein vorbestimmter Schwellwert ist. Andernfalls wird während der längeren Zeitdauer bis zur Berechnung der nächsten Stellgröße gewartet.

Gemäß einem bevorzugten Ausführungsbeispiel der Erfindung gehen auch Verzögerungszeit und/oder Totzeit des Prozesses in die Berechnung der Wartezeit mit ein. Auf diese Weise läßt sich ein optimales Reglerverhalten selbst bei einer Veränderung der Prozessparameter erzielen. Die Prozessparameter Totzeit und Verzögerungszeit können beispielsweise erfaßt werden aus dem Verlauf der Ausgangsgröße des Prozesses als Antwort auf einen Stellgrößensprung.

Die Stellgröße wird abhängig von der Sollwertabweichung der Ausgangsgröße berechnet und schließt bevorzugt weitere Eingangsgrößen ein, beispielsweise die zeitliche Änderung der Ausgangsgröße und/oder eine frühere Stellgröße, etwa die unmittelbar vorangehend berechnete Stellgröße.

Der Regler weist beispielsweise für die Berechnung der Wartezeit und/oder für die Berechnung der Stellgröße entsprechende Kennfelder auf oder verwendet zur Berechnung fuzzy-logische Verfahren einschließlich der Fuzzifizierung der in die Berechnung von Stellgröße bzw. Wartezeit einfließenden Eingangsgrößen, Anwendung einer Basis von Regeln auf die fuzzifizierten Eingangsgrößen und Defuzzifizierung der erhaltenen Fuzzymenge der Ausgangsgröße, um den Wert der Ausgangsgröße zu erhalten.

Das erfindungsgemäße Verfahren und die erfindungsgemäße Vorrichtung eignen sich in vorteilhafter Weise zur Regelung der Temperatur der Luft im Innenraum eines Absorberkühlschrankes.

Im folgenden wird die Erfindung anhand von Ausführungsbeispielen unter Bezugnahme auf die begleitenden Zeichnungen näher beschrieben. Es zeigt:

Figur 1    ein Beispiel eines Ausgangsgrößenverlaufes bei einem Stellgrößensprung;

Figur 2    ein Ausführungsbeispiel der Erfindung anhand eines Absorberkühlschrankes;

Figur 3    ein Beispiel einer Abfolge von Aktivitäts- und Inaktivitätsphasen des Reglers und ein Beispiel eines Verlaufs der Stellgröße;

Figur 4    ein Flußdiagramm zur Erläuterung der Arbeitsphasen des Reglers dieses Ausführungsbeispiels;

Figur 5    ein Blockdiagramm eines Ausführungsbeispiels eines Reglers;

Figur 6    ein Ausführungsbeispiel einer Reglerkomponente unter Verwendung von Fuzzylogik; und

Figur 7    ein Ausführungsbeispiel der Funktion des Differenziergliedes der Figur 5.

Figur 2 stellt ein Ausführungsbeispiel eines Reglers 1 der vorliegenden Erfindung dar, welcher eingesetzt wird, die Innenraumtemperatur in einem Kühlschrank oder Kühlraum 3 zu regeln. Der Kühlraum weist einen Verdampfer 4 auf, welcher in Verbindung steht mit einem Kühlaggregat 2, etwa einem Absorptionskühlaggregat, um dem Kühlraum 3 Wärme zu entziehen. Im Innenraum des Kühlraumes ist ein Temperatursensor 5 angeordnet, welcher die Lufttemperatur im Kühlraum erfaßt. Die erfasste Lufttemperatur wird als Ausgangsgröße (Istwert X) in den Regler 1 eingegeben. Der Regler 1 empfängt eine Temperatur-Sollwertvorgabe w von einem geeigneten Steller 6. Abhängig von diesen Eingangsgrößen berechnet der Regler einen Wert für die Stellgröße Y, welche die dem Kühlaggregat 2 kontinuierlich zugeführte Leistung ist. Über diese Stellgröße wird Einfluß genommen auf die mittels Kühlaggregat und Verdampfer erzielte Kühlwirkung im Kühlraum 3. Beispielsweise wird die Leistung über das Tastverhältnis eines intermittierend durch ein Heizelement des Kochers des Absorptionskühlaggregates fließenden, elektrischen Stromes oder bei Verwendung von Wechselstrom über den Stromflußwinkel eingestellt. Die Frequenz des intermittierenden Stromes ist dabei ausreichend hoch gewählt, so daß sich durch die integrierenden Eigenschaften des Kochers eine quasi kontinuierliche Leistungszuführung ergibt.

Es ist wünschenswert, die Lufttemperatur im Kühlraum so nahe wie möglich an der Sollwertvorgabe w zu halten. Aus diesem Grunde ist die Ausgangsgröße des von dem Regler 1 zu regelnden Prozesses die Innenraum-Lufttemperatur X.

Der Kühlkreislauf mit Kühlaggregat 2 und Verdampfer 4 weist erhebliche Totzeiten auf. Eine Änderung der Stellgröße führt erst nach Ablauf dieser Totzeit zu einer merklichen Änderung der Temperatur des Verdampfers 4. Bedingt durch die schlechte Wärmeleitfähigkeit von Luft ergibt sich zudem eine erhebliche Verzögerungszeit bei der Reaktion der erfaßten Innenraumtemperatur, d.h. der Ausgangsgröße X, auf eine Änderung der Stellgröße. Zudem hängt die Verzögerungszeit von der Beladung des Kühlraumes mit Kühlgut ab.

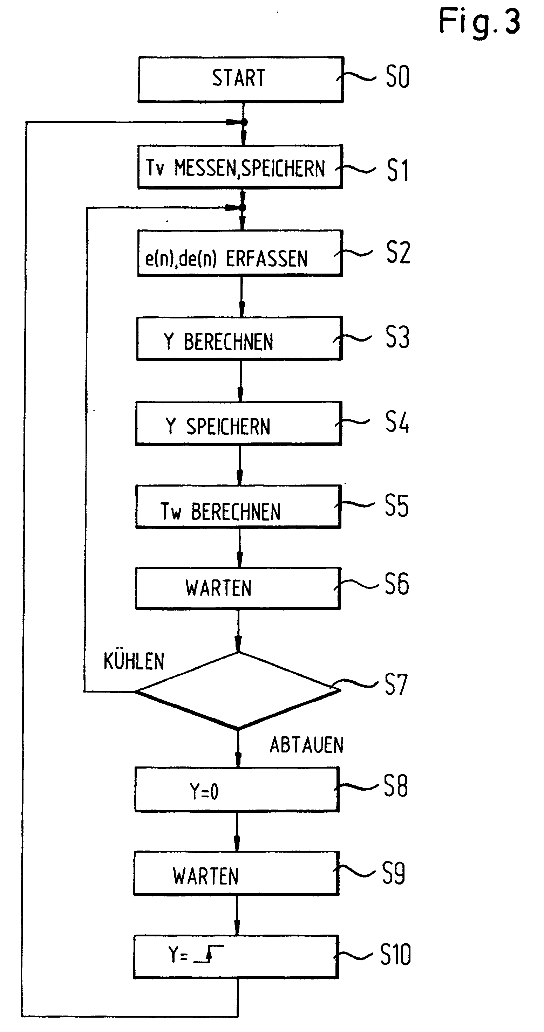

Figur 3 zeigt ein Flußdiagramm des Regelungsvorganges zum Regeln der Innenraumtemperatur gemäß diesem Ausführungsbeispiel der vorliegenden Erfindung. Nach dem Einschalten des Reglers in Schritt S0 wird in Schritt S1 zunächst die Verzögerungszeit $T_v$ des Prozesses erfaßt, um optimales Reglerverhalten auch bei wechselnder Beladung zu ermöglichen. Dazu wird das Kühlaggregat beispielsweise sprungartig vom Regler 1 eingeschaltet, d.h. mit einem Stellgrößensprung beaufschlagt, um für eine bestimmte Zeit, die größer ist als die Totzeit $T_{tot}$ des Prozesses, mit einer vorbestimmten konstanten Leistung zu arbeiten. Nach Ablauf dieser vorbestimmten Zeit wird dann die Steigung der Kurve der Innenraumtemperatur über der Zeit oder eine mittlere Steigung über einen vorgegebenen Zeitraum erfaßt und daraus die Verzögerungszeit $T_v$ dieses Prozesses bestimmt.

Im anschließenden Schritt S2 beginnt der eigentliche Vorgang des Regelns der Innenraumtemperatur. Dazu wird in diesem Ausführungsbeispiel die Abweichung des Temperatur-Istwertes von der Sollwertvorgabe erfaßt. Ferner wird die momentane Änderung der Innenraumtemperatur erfaßt. Der Regler 1 berechnet in Schritt S3 aus der Sollwertabweichung, aus der Innenraumtemperaturänderung und aus dem Wert der bisherigen Stellgröße eine neue Stellgröße (Schritt S3) und speichert diese neu berechnete Stellgröße in Schritt S4 ab. Diese neu berechnete Stellgröße wird in den Kühlprozess eingegeben. Der Regler berechnet ferner in S5 eine Wartezeit $T_w$, während welcher kein Regelungsvorgang stattfindet, sondern die berechnete Stellgröße konstant gehalten wird. Diese Wartezeit wird auf der Grundlage der neu berechneten, aktuellen Stellgröße und der vorangehenden Stellgröße berechnet. Unterscheidet sich die aktuelle Stellgröße Y(n) von der zuvor berechneten Stellgröße, beispielsweise der unmittelbar zuvor berechneten Stellgröße Y(n-1) um mehr als einen vorgegebenen Wert, so verlängert der Regler die Wartezeit bis zur Berechnung der nächsten Stellgröße und hält während der Wartezeit (S6) die aktuelle Stellgröße Y unverändert. Durch die Einbeziehung der Stellgrößenänderung in die Wartezeit ist es möglich, optimales Regelverhalten sowohl für den Fall von Sollwertsprüngen zu erzielen, als auch optimales Regelverhalten bei der Ausregelung von Störungen. Dadurch, daß bei großen Stellgrößensprüngen bzw. bei großen Sollwertsprüngen die Reaktion des Prozesses während einer längeren Wartezeit abgewartet wird, bevor eine erneute Stellgrößenberechnung stattfindet, kann das Verhalten des Prozesses mit besserer Genauigkeit in den Regelungsvorgang eingehen und auf diese Weise Überschwingen vermieden werden. Andererseits kann der Regler durch kürzere Wartezeiten bei kleinen Stellgrößenänderungen schnell auf Störeinflüsse reagieren und solche Einflüsse schnell ausregeln.

Bei der Berechnung der Wartezeit in S5 wird die in Schritt S1 erfaßte Verzögerungszeit und somit die Beladung des Innenraumes mit Kühlgut berücksichtigt. Je größer die erfaßte Verzögerungszeit ist, desto größer ist die Wartezeit bis zur Berechnung einer neuen Stellgröße.

Nach Verstreichen der Wartezeit wird in Schritt S7 überprüft, wie lange der Kühlvorgang bisher andauert. Wird in Schritt 7 gefunden, daß der Kühlvorgang eine bestimmte Dauer erreicht hat, wird für einen Abtauvorgang zu Schritt S8 übergegangen, während andernfalls der Regelungsvorgang mit Schritt S2 fortgesetzt wird.

In Schritt S8 wird die dem Kühlaggregat zugeführte Leistung abgeschaltet und in Schritt S9 gewartet, um Eis abzutauen, das sich am Verdampfer 9 gebildet hat. Anschließend wird in Schritt S10 ein Stellgrößensprung bewirkt, analog zum Vorgang beim Einschalten in S0. Daran anschließend wird wiederum in S1 die Verzögerungszeit des Prozesses neu erfaßt und abgespeichert, um für die Berechnung der Wartezeit in S5 zur Verfügung zu stehen. Auf diese Weise kann selbst bei einer Variation der Prozessparameter, d.h. bei unterschiedlicher Beladung des Kühlschrankes das Reglerverhalten angepaßt optimal sein.

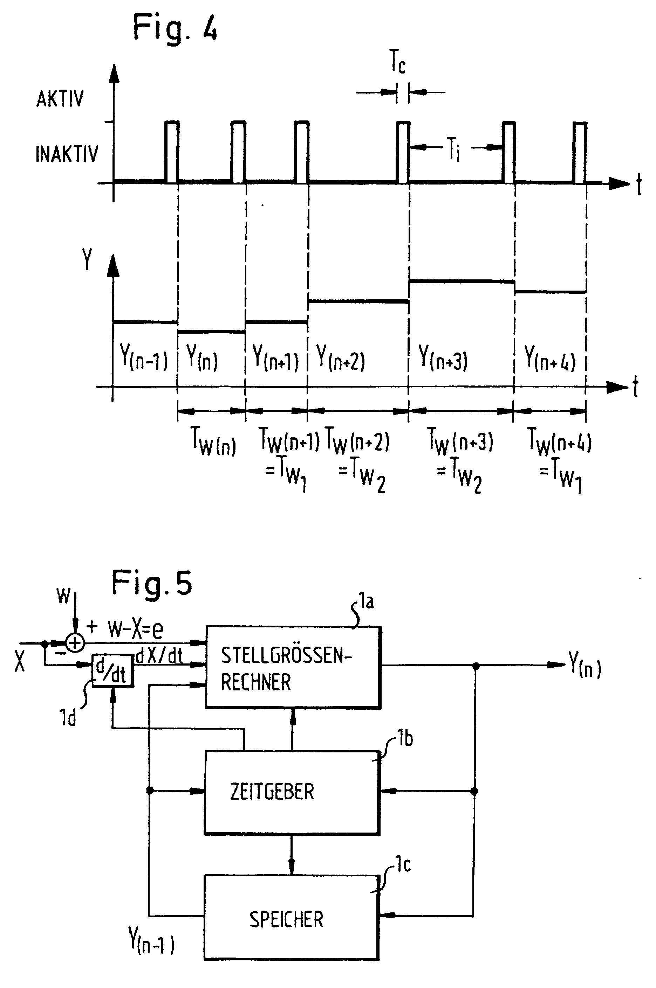

Figur 4 zeigt im oberen Diagramm eine Abfolge von Aktivitätszyklen mit einer Dauer $T_c$, welche der Regler benötigt, um die Berechnung der neuen Stellgröße und die Berechnung der Wartezeit $T_w$, während welcher die neu berechnete Stellgröße konstant gehalten wird, durchzuführen. Dabei ergibt sich ein Verlauf der Stellgröße, wie er etwa im unteren Diagramm der Figur 4 dargestellt ist. Führt die Stellgröße einen Sprung aus, welcher größer als ein vorbestimmter Schwellwert ist, so verlängert sich die Wartezeit bis zur Berechnung einer neuen Stellgröße. Es hat sich gezeigt, daß ein zufriedenstellendes Reglerverhalten bereits dann erreicht werden kann, wenn der Regler abhängig von der Größe des Stellgrößensprunges zwischen zwei verschieden langen Wartezeiten auswählt, welche von der Höhe des Stellgrößensprunges nicht abhängig sind. Die kürzere Wartezeit wird gewählt, wenn der Stellgrößensprung unterhalb der vorbestimmten Schwelle ist, während andernfalls die längere Wartezeit gewählt wird.

Bevorzugt sind die längere und die kürzere Wartezeit abhängig von der Verzögerungszeit des Prozesses, also abhängig vom Beladungszustand des Kühlschrankes. Je größer die Beladung ist, desto länger sind diese Wartezeiten.

Die zur Berechnung der neuen Stellgröße und der Wartezeit erforderliche Berechnungszeit $T_c$, d.h. die Dauer der Aktivitätsphase, ist in diesem Ausführungsbeispiel gegenüber der Dauer der Inaktivitätsphase $T_i$ vernachlässigbar kurz, so daß Wartezeit $T_w$ und Dauer der Inaktivitätsphase $T_i$ nahezu gleich groß sind. Die Größe der Wartezeit hängt vom zu regelnden Prozess ab und bewegt sich in der Größenordnung der Totzeit des Prozesses.

Figur 5 zeigt ein Blockschaltbild eines Ausführungsbeispiels des erfindungsgemäßen Reglers. Der Regler umfaßt einen Stellgrößenrechner 1a, einen Zeitgeber 1b und einen Speicher 1c. Der Stellgrößenrechner 1a empfängt als Eingangsgrößen die Sollwertabweichung e=(w-X), die zeitliche Änderung der Sollwertabweichung de=(d/dt) (X) und die vorherige Stellgröße Y(n-1). Aus diesen Eingangsgrößen berechnet der Stellgrößenrechner 1a eine neue Stellgröße Y(n). Die zeitliche Änderung de der Sollwertabweichung wird mittels eines analogen oder diskreten Differenziergliedes 1e, etwa eines Mikroprozessors, bestimmt. Der Speicher 1c speichert die vorherige Stellgröße Y(n-1), bevor der Stellgrößenrechner 1a eine neue Stellgröße Y(n) ausgibt.

Der Zeitgeber 1b dient zur Berechnung der Wartezeit $T_w$, während welcher die Stellgröße Y(n) unverändert bleibt und steuert über die Verbindung mit dem Stellgrößenrechner 1a die Inaktivitäts- und Aktivitätsphasen des Stellgrößenrechners 1a. Zur Berechnung der Wartezeit empfängt der Zeitgeber die neu berechnete Stellgröße Y(n) und die vorangehende Stellgröße Y(n-1) aus dem Speicher 1c. Der Zeitgeber steuert ferner den Abtauvorgang in regelmäßigen Zeitabständen und erfaßt zu Beginn der nächsten Kühlphase aus dem Abfall der Innenraumtemperatur die Verzögerungszeit $T_v$ des Prozesses. Alternativ oder zusätzlich kann zur Erfassung der Verzögerungszeit der Temperaturverlauf der Innenraumtemperatur während der Abtauphase verwendet werden. Schließlich steuert der Zeitgeber die Aktualisierung des Speichers 1c. Die Funktionen des Stellgrößenrechners und des Zeitgebers werden bevorzugt von einem einzigen Mikroprozessor übernommen, können jedoch auch als separate Einheiten ausgeführt sein. Zur Berechnung der Stellgröße sind dem Stellgrößenrechner geeignete Analog/Digitalwandler vorgeschaltet. Die Stellgröße Y liegt je nach Prozeß als impulsbreitenmoduliertes Digitalsignal zur Leistungseinstellung vor, oder als numerischer Digitalwert, der nach Umwandlung in einen Analogwert in den Prozess eingegeben wird.

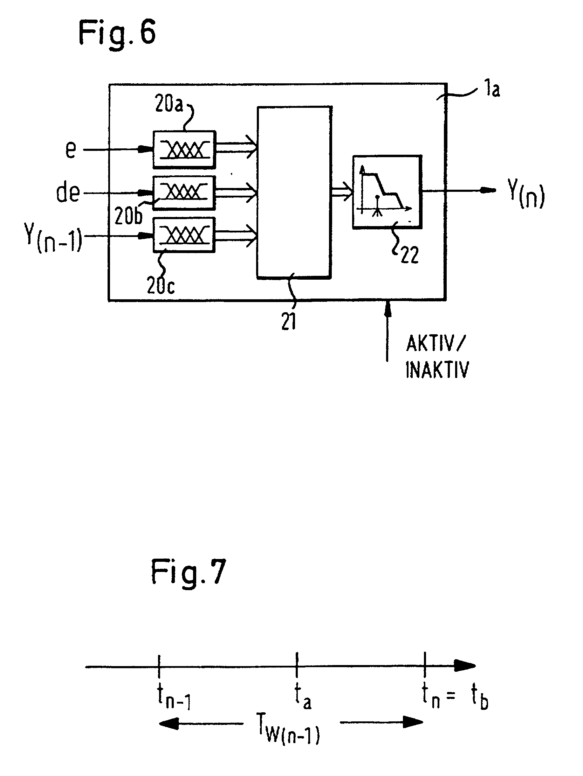

Die Berechnung der Stellgröße mittels des Stellgrößenrechners 1a wird bevorzugt unter Zugriff auf ein Kennfeld in einem dafür vorgesehenen Kennfeldspeicher durchgeführt. Gemäß einer weiteren, bevorzugten Ausführungsform verwendet der Stellgrößenrechner 1a Fuzzylogik zur Berechnung der Stellgröße. Figur 6 zeigt die wesentlichen funktionellen Bestandteile eines auf Fuzzylogik basierenden Stellgrößenrechners 1a. Die Eingangsgrößen Sollwertabweichung e, zeitliche Änderung der Sollwertabweichung oder zeitliche Änderung der Innenraumtemperatur de und die vorherige Stellgröße Y werden in Fuzzifizierungseinheiten 20a bis 20c fuzzifiziert. Eine Regelbasis 21 enthält einen Satz von Regeln, welche linguistische Terme der jeweiligen Eingangsgrößen mit linguistischen Termen der zu berechnenden Stellgröße verknüpfen. Je nach Zugehörigkeitsgrad der Eingangsgrößen zu den Fuzzymengen der linguistischen Terme ergeben sich verschiedene Erfüllungsgrade der Regeln in der Basis 21. Die Vereinigungsmenge der jeweiligen Ergebnis-Fuzzymengen der aktiven Regeln in der Regelbasis 21 ergibt die Fuzzymenge der neu berechneten Stellgröße. Aus dieser Fuzzymenge wird ein scharfer Wert der neuen Stellgröße Y durch Defuzzifizierung, beispielsweise nach der Schwerpunktmethode, gewonnen. Die Verwendung von Fuzzylogik durch den Stellgrößenrechner 1a hat den Vorteil, daß kein großer Kennfeldspeicher benötigt wird und durch Modifikation der Regeln in der Regelbasis 21 auf einfache Weise zu einem optimierten Reglerverhalten gelangt werden kann.

Figur 7 zeigt die Arbeitsweise eines Ausführungsbeispiels des Differenziergliedes 1e der Figur 5. Gemäß diesem Ausführungsbeispiel wird die zeitliche Änderung der Sollwertabweichung e bzw. die zeitliche Änderung der Innenraumtemperatur abgeschätzt durch Erfassen der Innenraumtemperatur hintereinander in den Zeitpunkten $t_a$ und $t_b$, und Abschätzen der zeitlichen Änderung aus der Differenz der in diesen Zeitpunkten erfaßten Temperaturwerte. Der zeitliche Abstand zwischen $t_a$ und $t_b$ ist so gewählt, daß ein Kompromiß getroffen wird zwischen der Präzision der Abschätzung der Änderung einerseits und der Auflösung kleiner Änderungen andererseits. Ein bevorzugter zeitlicher Ab-

stand zwischen $t_a$ und $t_b$ liegt bei der Hälfte der Wartezeit $T_w$. Der Zeitpunkt $t_b$ kann mit dem Ende der Wartezeit zusammenfallen.

## Patentansprüche

1.  Verfahren zum Regeln einer Ausgangsgröße eines Prozesses mit den Schritten:

    -   Erfassen eines Abtastwertes der Ausgangsgröße (X);

    -   Vergleichen (S2) des Abtastwertes der Ausgangsgröße (X) mit einem Sollwert (w) und Ermitteln einer Sollwertabweichung (e);

    -   Berechnen (S3) eines Wertes einer Stellgröße (Y) abhängig von der ermittelten Sollwertabweichung (e) derart, dass die Ausgangsgröße (X) des Prozesses an den Sollwert (w) herangeführt wird, und Eingeben der Stellgröße (Y) in den Prozess;

    -   Berechnen einer variablen Watezeit ($T_w$) und nach Verstreichen (S6) der Wartezeit ($T_w$) erneutes Bestimmen (S3) eines Wertes der Stellgröße (Y);

    -   wobei während der Wartezeit ($T_w$) die Stellgröße nicht geändert wird,

    **dadurch gekennzeichnet, daß**

    -   die Wartezeit ($T_w$) auf der Grundlage der Differenz zwischen dem Wert der Stellgröße (Y) und einem früheren Wert der Stellgröße (Y), die auf der Grundlage eines früheren Abtastwertes berechnet wurde, berechnet wird (S5).

2.  Verfahren nach Anspruch 1,
    **dadurch gekennzeichnet, daß** die Abhängigkeit der Wartezeit ($T_w$) vom Betrag der Differenz ein monoton steigendes Verhalten aufweist.

3.  Verfahren nach Anspruch 2,
    **dadurch gekennzeichnet, daß** die Wartezeit ($T_w$) eine erste vorgegebene Zeitdauer ($T_{w1}$) beträgt, wenn der Betrag der Differenz zwischen berechnetem und früherem Stellgrößenwert (Y) kleiner als ein vorgegebener Wert ist, und andernfalls die Wartezeit ($T_w$) eine zweite vorgegebene Zeitdauer ($T_{w2}$) beträgt, die größer als die erste Zeitdauer ist.

4.  Verfahren nach Anspruch 3,
    **dadurch gekennzeichnet, daß** die zweite vorgegebene Zeitdauer um mehr als 25% größer als die erste vorgegebene Zeitdauer ist.

5.  Verfahren nach einem der vorangehenden Ansprüche,
    **gekennzeichnet durch**

    -   Erfassen (S1) einer Verzögerungszeit ($T_v$) und/ oder Totzeit ($T_{tot}$) des Prozesses; und

    -   Berechnen (S5) der Wartezeit auf der Grundlage der erfaßten Verzögerungszeit und/oder Totzeit.

6.  Verfahren nach Anspruch 3, 4 oder 5,
    **dadurch gekennzeichnet, daß** die erste vorgegebene Zeitdauer ($T_{w1}$) größer oder gleich einer Totzeit ($T_{tot}$) des Prozesses ist.

7.  Verfahren nach Anspruch 5,
    **dadurch gekennzeichnet, daß** die Verzögerungszeit ($T_v$) des Prozesses erfaßt wird mit den Schritten

    -   Beaufschlagen des Prozesses mit einem Stellgrößensprung (S10);

    -   nach Verstreichen einer vorbestimmten Erfassungszeitdauer Erfassen (S1) des zeitlichen Verlaufs der Ausgangsgröße (X).

8.  Verfahren nach Anspruch 5,
    **dadurch gekennzeichnet, daß** die Totzeit ($T_{tot}$) des Prozesses erfaßt wird mit den Schritten

    -   Beaufschlagen des Prozesses mit einem Stellgrößensprung; und

    -   Erfassen einer Zeitdauer beginnend mit dem Zeitpunkt ($t_o$) des Stellgrößensprunges bis zu dem Zeitpunkt $T_{tot}$, in welchem die Änderung der Ausgangsgröße (X) eine vorbestimmte Schwelle überschreitet.

9.  Verfahren nach einem der Ansprüche 5 bis 8,
    **dadurch gekennzeichnet, daß** die Verzögerungszeit ($T_v$) und/oder Totzeit ($T_{tot}$) regelmäßig wiederkehrend erfaßt werden (S7).

10. Verfahren nach einem der vorangehenden Ansprüche,
    **dadurch gekennzeichnet, daß** die Berechnung der Stellgröße (Y) die weiteren Schritte umfaßt:

    -   Erfassen (S2) der zeitlichen Änderung der Ausgangsgröße (X);

    -   Berechnen der Stellgröße (Y) auf der Grundlage der Ausgangsgröße (X), der zeitlichen Änderung der Ausgangsgröße (X) und der früheren Stellgröße (Y) .

**11.** Verfahren nach Anspruch 10, **dadurch gekennzeichnet, daß** die zeitliche Änderung der Ausgangsgröße aus der Differenz zweier aufeinanderfolgender Abtastwerte $(X(n), X(n-1))$ der Ausgangsgröße $(X)$ berechnet wird.

**12.** Verfahren nach Anspruch 11, **dadurch gekennzeichnet, daß** der zeitliche Abstand zwischen den zwei aufeinanderfolgenden Abtastwerten der Ausgangsgröße die Hälfte der Wartezeit $(T_w(n))$ ist.

**13.** Verfahren nach einem der vorangehenden Ansprüche, **dadurch gekennzeichnet, daß** die Stellgröße $(Y)$ während der Wartezeit $(T_w)$ konstant ist.

**14.** Verfahren nach einem der vorangehenden Ansprüche, **dadurch gekennzeichnet, daß** die Wartezeit $(T_w(n))$ und/oder die Stellgröße $(Y(n))$ aus einem Kennfeld ausgelesen werden.

**15.** Verfahren nach einem der Ansprüche 1 bis 13, **dadurch gekennzeichnet, daß** die Stellgröße $(Y)$ und/oder die Wartezeit $(T_w)$ mittels Fuzzylogik berechnet wird, mit den Schritten

- Definieren von linguistischen Termen jeweils für die als Grundlage für die Berechnung der Stellgröße bzw. Wartezeit dienenden Größen $(e, de)$ sowie für die Stellgröße $(Y)$ bzw. Wartezeit $(T_w)$

- Definieren von Mitgliedschaftsfunktionen für jeden der linguistischen Terme;

- für jede Größe Ermitteln der Mitgliedschaftswerte zu jedem betreffenden Term,

- Eingeben der Mitgliedschaftswerte in eine Regelbasis (21), welche die linguistischen Terme der Eingangsgrößen mit den linguistischen Termen der Stellgröße $(Y)$ bzw. Wartezeit $(T_w)$ verknüpft, und Berechnen einer Mitgliedschaftsfunktion für die Stellgröße $(Y)$ bzw. Wartezeit $(T_w)$; und

- Defuzzifizieren der Stellgröße bzw. Wartezeit auf der Grundlage von deren Mitgliedschaftsfunktion.

**16.** Verfahren nach einem der vorangehenden Ansprüche, **dadurch gekennzeichnet, daß** die Stellgröße $(Y)$ die einem Kocher des Absorptionskühlaggregates (2) in einem Kühlschrank (2,3,4) zugeführte Antriebsleistung ist, die Ausgangsgröße $(X)$ die Innenraumtemperatur des Kühlraumes (3) ist, und der Sollwert $(w)$ eine voreinstellbare Vorgabe der Innenraumtemperatur ist.

**17.** Verfahren nach Anspruch 16 soweit abhängig von Anspruch 9, **dadurch gekennzeichnet, daß** die Erfassung von Totzeit $(T_{tot})$ und/oder Verzögerungszeit $(T_v)$ nach einem Abtauvorgang durchgeführt wird.

**18.** Regler zur Durchführung des Verfahrens nach einem der vorangehenden Ansprüche, mit

- einer Einrichtung (5) zur Erfassung der Ausgangsgröße $(X)$ des Prozesses;

- einer Einstelleinrichtung (6) zum Voreinstellen des Sollwertes $(w)$ ;

- einem Mikroprozessor mit Arbeits- und Programmspeicher, zum Empfangen einer Sollwertabweichung $(e)$ und zum Berechnen und Ausgeben eines aktuellen Wertes für die Stellgröße $(Y)$,

- einer Einrichtung zur Eingabe der Stellgröße in den Prozeß;

- einem Zeitgeber (1b), welcher ausgebildet ist, eine variable Wartezeit $(T_w)$ zu berechnen, während welcher die Stellgröße nicht geändert wird;

  **gekennzeichnet durch:**

- einen Speicher (lc) für eine früher berechnete Stellgröße $(Y)$;

- wobei der Zeitgeber (1b) ausgebildet ist, den früher berechneten Wert der Stellgröße und den aktuellen Wert der Stellgröße zu empfangen, abhängig von deren Differenz die Wartezeit $(T_w)$ zu berechnen, und nach Verstreichen dieser Wartezeit eine erneute Berechnung eines Wertes für die Stellgröße $(Y)$ **durch** den Mikroprozessor auszulösen.

**19.** Regler nach Anspruch 18, **gekennzeichnet durch** eine Einrichtung zum Berechnen der Differenz zwischen der gespeicherten, früher berechneten Stellgröße $(Y)$ und dem aktuell berechneten Wert der Stellgröße $(Y)$; wobei der Zeitgeber (1b) ausgebildet ist, abhängig von dieser Differenz die Wartezeit $(T_w(n))$ zu berechnen.

**20.** Regler nach Anspruch 19, **dadurch gekennzeichnet, daß** der Zeitgeber (1b) ausgebildet ist, eine erste Wartezeit $(T_{w1})$ vorzugeben, wenn der Betrag der Differenz zwischen dem früheren und dem aktuellen Wert der Stellgröße kleiner ist als ein vorbestimmter Wert, und eine zweite größere Wartezeit ($T_{w2}$) vorzugeben, wenn der Betrag dieser Differenz größer als der Schwellwert ist.

21. Regler nach Anspruch 18, 19 oder 20, **dadurch gekennzeichnet, daß** der Zeitgeber (1b) ausgebildet ist, die Wartezeit ($T_w$) abhängig von einer Totzeit ($T_{tot}$) und/oder Verzögerungszeit ($T_v$) des Prozesses zu berechnen.

22. Regler nach einem der Ansprüche 18 bis 21, **dadurch gekennzeichnet, daß**

    - die Einrichtung zur Erfassung der Ausgangsgröße (y) des Prozesses einen Lufttemperatursensor (5) und einen Analog/Digital-Wandler einschließt, und

    - die Einrichtung zur Eingabe der Stellgröße in den Prozess ein Stellglied zum Einstellen von dem Prozess zuzuführender Leistung umfaßt.

23. Regler nach einem der Ansprüche 18 bis 22, **gekennzeichnet durch**

    - eine Einrichtung (1d) zum Erfassen der zeitlichen Änderung der Ausgangsgröße und Eingeben des erfaßten Änderungswertes in den Mikroprozessor.

24. Regler nach einem der Ansprüche 18 bis 22, **dadurch gekennzeichnet, daß** zur Berechnung der Stellgröße (Y) und/oder der Wartezeit ($T_w$) ein Kennfeldspeicher vorgesehen ist.

25. Regler nach Anspruch 23, **gekennzeichnet, durch**

    - Einrichtungen (20a) zum Fuzzifizieren einer Abweichung der Ausgangsgröße (X) vom voreingestellten Sollwert (w),

    - Einrichtungen (20b) zum Fuzzifizieren des erfaßten Änderungswertes (de);

    - Einrichtungen (20c) zum Fuzzifizieren der früher berechneten Stellgröße;

    - Einrichtungen (21) zum Speichern von fuzzylogischen Regeln zur Verwendung **durch** den Mikroprozessor; und

    - Einrichtungen (22) zum Defuzzifizieren einer von dem Mikroprozessor ausgegebenen Fuzzymenge der Ausgangsgröße (X).

**Claims**

1. Method for the control of an output variable of a process having the steps:

    - capture of a sampling value of the output variable (X);

    - comparison (S2) of the sampling value of the output variable (X) with a desired value (w) and determination of a deviation (e) from the desired value;

    - calculation (S3) of a value of an adjustable variable (Y) dependent on the determined deviation (e) from the desired value in such a way that the output variable (X) of the process is brought near to the desired value (w), and input of the adjustable variable (Y) into the process;

    - calculation of a variable waiting time ($T_w$) and after expiration (S6) of the waiting time ($T_w$) renewed determination (S3) of a value of the adjustable variable (Y);

    - the adjustable variable not being changed during the waiting time ($T_w$),

    **characterised in that**

    - the waiting time ($T_w$) is calculated (S5) on the basis of the difference between the value of the adjustable variable (Y) and an earlier value of the adjustable variable (Y) which was calculated on the basis of an earlier sampling value.

2. Method according to Claim 1, **characterised in that** the dependence of the waiting time ($T_w$) on the amount of the difference exhibits monotonically rising behaviour.

3. Method according to Claim 2, **characterised in that** the waiting time ($T_w$) amounts to a first predetermined time period ($T_{w1}$) when the amount of the difference between the calculated and earlier adjustable variable value (Y) is smaller than a predetermined value and otherwise the waiting time ($T_w$) amounts to a second predetermined time period ($T_{w2}$) which is greater than the first time period.

4. Method according to Claim 3, **characterised in that** the second predetermined time period is greater by more than 25% than the first predetermined time period.

5. Method according to one of the preceding claims, **characterised by**:

- capture (S1) of a delay time ($T_V$) and/or downtime ($T_{down}$) of the process; and

- calculation (S5) of the waiting time on the basis of the captured delay time and/or downtime.

**6.** Method according to Claim 3, 4 or 5, **characterised in that** the first predetermined time period ($T_{W1}$) is greater than or equal to a downtime ($T_{down}$) of the process.

**7.** Method according to Claim 5, **characterised in that** the delay time ($T_V$) of the process is captured by the steps:

- application of a jump (S10) in the adjustable variable to the process;

- after expiration of a predetermined capture time period capture (S1) of the variation over time of the output variable (X).

**8.** Method according to Claim 5, **characterised in that** the downtime ($T_{down}$) of the process is captured by the steps:

- application of a jump in the adjustable variable to the process; and

- capture of a time period starting at the time ($t_0$) of the jump in adjustable variable up to the time ($T_{down}$) at which the change in the output variable (X) exceeds a predetermined threshold.

**9.** Method according to one of Claims 5 to 8, **characterised in that** the delay time ($T_V$) and/or downtime ($T_{down}$) are captured (S7) at regularly recurring intervals.

**10.** Method according to one of the preceding claims, **characterised in that** the calculation of the adjustable variable (Y) comprises the further steps:

- capture (S2) of the change over time of the output variable (X); and

- calculation of the adjustable variable (Y) on the basis of the output variable (X), the change over time of the output variable (X) and the earlier adjustable variable (Y) .

**11.** Method according to Claim 10, **characterised in that** the change over time of the output variable is calculated from the difference between two successive sampling values (X(n), X(n-1)) of the output variable (X).

**12.** Method according to Claim 11, **characterised in that** the length of time between the two successive sampling values of the output variable is half the waiting time ($T_w(n)$).

**13.** Method according to one of the preceding claims, **characterised in that** the adjustable variable (Y) is constant during the waiting time ($T_w$).

**14.** Method according to one of the preceding claims, **characterised in that** the waiting time ($T_w(n)$) and/or the adjustable variable (Y(n)) are read out from a characteristic field.

**15.** Method according to one of Claims 1 to 13, **characterised in that** the adjustable variable (Y) and/or the waiting time ($T_w$) is calculated by means of fuzzy logic using the steps:

- definition of linguistic terms in each case for the variables serving as the basis for the calculation of the adjustable variable or the waiting time (e, de) and for the adjustable variable (Y) or the waiting time ($T_w$);

- definition of membership functions for each of the linguistic terms;

- for each variable determination of the membership values for each relevant term;

- input of the membership values into a rule base (21) which links the linguistic terms of the input variables to the linguistic terms of the adjustable variable (Y) or waiting time ($T_w$) and calculation of a membership function for the adjustable variable (Y) or waiting time ($T_w$); and

- defuzzying the adjustable variable or waiting time on the basis of their membership function.

**16.** Method according to one of the preceding claims, **characterised in that** the adjustable variable (Y) is the drive power fed to a boiler in the absorption refrigerating unit (2) in a refrigerator (2, 3, 4), the output variable (X) is the interior temperature in the refrigerated space (3) and the desired value (w) is a pre-adjustable specification of the interior temperature.

**17.** Method according to Claim 16 in so far as dependent on Claim 9, **characterised in that** the capture of downtime ($T_{down}$) and/or delay time ($T_V$) is carried out after a thawing operation.

**18.** Controller for carrying out the method according to one of the preceding claims having:

- a device (5) for acquiring the output variable (X) of the process;

- an adjusting device (6) for the presetting of the desired value (w);

- a microprocessor having work and program memories for receiving a desired value deviation (e) and for calculating and outputting a current value for the adjustable variable (Y);

- a device for the input of the adjustable variable into the process;

- a timer (1b) which is constructed to calculate a variable waiting time ($T_w$) during which the adjustable variable is not changed;

**characterised by**:

- a memory (1c) for an adjustable variable (Y) calculated earlier;

- the timer (1b) being constructed to receive the earlier calculated value of the adjustable variable and the current value of the adjustable variable, to calculate the waiting time ($T_w$) as a function of their difference and after expiration of this waiting time to initiate a fresh calculation of a value for the adjustable variable (Y) by the microprocessor.

**19.** Controller according to Claim 18, **characterised by** a device for the calculation of the difference between the stored adjustable variable (Y) calculated earlier and the current calculated value of the adjustable variable (Y), the timer (1b) being constructed to calculate the waiting time ($T_w(n)$) as a function of this difference.

**20.** Controller according to Claim 19, **characterised in that** the timer (1b) is constructed to specify a first waiting time ($T_{w1}$) if the amount of the difference between the earlier and the current value of the adjustable variable is less than a predetermined value, and to specify a second greater waiting time ($T_{w2}$) if the amount of the difference is greater than the threshold value.

**21.** Controller according to Claim 18, 19 or 20, **characterised in that** the timer (1b) is constructed to calculate the waiting time ($T_w$) as a function of a downtime ($T_{down}$) and/or delay time ($T_v$) of the process.

**22.** Controller according to one of Claims 18 to 21, **characterised in that**

- the device for capturing the output variable (y) of the process includes a air temperature sensor (5) and an analogue-to-digital converter; and

- the device for the input of the adjustable variable into the process comprises a controlling element for adjusting the power fed to the process.

**23.** Controller according to one of Claims 18 to 22, **characterised by**

- a device (1d) for capturing the change over time of the output variable and inputting the captured change value into the microprocessor.

**24.** Controller according to one of Claims 18 to 22, **characterised in that** a characteristic field memory is provided for the calculation of the adjustable variable (Y) and/or the waiting time ($T_w$).

**25.** Controller according to Claim 23, **characterised by**:

- devices (20a) for rendering fuzzy a deviation of the output variable (X) from the preset desired value (w);

- devices (20b) for rendering fuzzy the captured change value (de);

- devices (20c) for rendering fuzzy the adjustable variable calculated earlier;

- devices (21) for the storage of fuzzy logic rules for use by the microprocessor; and

- devices (22) for defuzzying a fuzzy measure of the output variable (X) output by the microprocessor.

## Revendications

**1.** Procédé de régulation d'une grandeur de sortie d'un processus, comportant les étapes consistant à :

- appréhender une valeur d'exploration de la grandeur de sortie (X);
- comparer (S2) la valeur d'exploration de la grandeur de sortie (X) à une valeur de consigne (w) et déterminer un écart sur valeur de consigne (e);
- calculer (S3) une valeur d'une grandeur de réglage (Y), dépendant de l'écart sur valeur de consigne (e) déterminé, de manière que la grandeur de sortie (X) du processus soit amenée à coïncider avec la valeur de consigne (w), et introduction de la grandeur de réglage (Y) dans le processus;

- calcul d'un temps d'attente ($T_w$) variable et, après écoulement (S6) du temps d'attente ($T_w$), procéder de nouveau à la détermination (S3) d'une valeur de la grandeur de réglage (Y);
- la grandeur de réglage n'étant pas modifiée pendant la durée d'attente ($T_w$),

**caractérisé en ce que**

- le temps d'attente ($T_w$) est calculé d'après la différence entre la valeur de la grandeur de réglage (Y) et une valeur antérieure de la grandeur de réglage (Y), qui avait été calculée (S5) d'après une valeur d'exploration antérieure.

2.  Procédé selon la revendication 1, **caractérisé en ce que** la dépendance entre le temps d'attente ($T_w$) et la valeur de la différence présente un comportement à pente ascendante monotone.

3.  Procédé selon la revendication 2, **caractérisé en ce que** le temps d'attente ($T_w$) est d'une première durée ($T_{w1}$) prédéterminée, lorsque la valeur de la différence, entre la valeur de grandeur de réglage (Y) calculée et celle antérieure, est inférieure à une valeur prédéterminée et, autrement, le temps d'attente ($T_w$) est d'une deuxième durée ($Tw_2$) prédéterminée, supérieure à la première durée.

4.  Procédé selon la revendication 3, **caractérisé en ce que** la deuxième durée prédéterminée est supérieure de plus de 25% à la première durée prédéterminée.

5.  Procédé selon l'une des revendications précédentes, **caractérisé par** les étapes consistant à :

- détecter (S1) un temps de retardement ($T_v$) et/ou un temps mort ($T_{mort}$) du processus; et
- calculer (S5) le temps d'attente d'après le temps de retardement et/ou le temps mort appréhendé(s).

6.  Procédé selon la revendication 3, 4 ou 5, **caractérisé en ce que** la première durée ($T_{w1}$) prédéterminée est supérieure ou égale à un temps mort ($T_{mort}$) du processus.

7.  Procédé selon la revendication 5, **caractérisé en ce que** le temps de retardement ($T_w$) du processus est appréhendé en suivant les étapes consistant à :

- exposer le processus à un saut de grandeur de réglage (S10) ;
- après écoulement d'une durée de temps de détection prédéterminée, appréhender (S1) l'allure temporelle de la grandeur (X).

8.  Procédé selon la revendication 5, **caractérisé en ce que** le temps mort ($T_{mort}$) du processus est appréhendé avec les étapes consistant à :

- exposer le processus à un saut de grandeur de réglage; et
- appréhender une durée, commençant par le moment ($T_o$) du saut de grandeur de réglage et allant jusqu'au moment $T_{mort}$ auquel la variation de la grandeur de sortie (X) dépasse un seuil prédéterminé.

9.  Procédé selon Tune des revendications 5 à 8, **caractérisé en ce que** le temps de retardement ($T_v$) et/ou le temps mort ($T_{mort}$) sont appréhendés (S7) régulièrement, de façon répétitive.

10. Procédé selon l'une des revendications précédentes, **caractérisé en ce que** le calcul de la grandeur de réglage (Y) comprend les étapes supplémentaires consistant à :

- détecter (S2) de la variation temporelle de la grandeur de sortie (X) ;
- calculer la grandeur de réglage (Y) d'après la grandeur de sortie (X), la modification temporelle de la grandeur de sortie (X) et la grandeur de réglage (Y) antérieure.

11. Procédé selon la revendication 10, **caractérisé en ce que** la variation temporelle de la grandeur de sortie est calculée à partir de la différence entre deux valeurs d'exploration (X(n), X(n-1)) successives de la grandeur de sortie (X).

12. Procédé selon la revendication 11, **caractérisé en ce que** l'espacement temporel, entre deux valeurs d'exploration successives de la grandeur de sortie, vaut la moitié du temps d'attente ($T_w$(n)).

13. Procédé selon l'une des revendications précédentes, **caractérisé en ce que** la grandeur de réglage (Y) est constante pendant le temps d'attente ($T_w$).

14. Procédé selon l'une des revendications précédentes, **caractérisé en ce que** le temps d'attente ($T_w$(n)) et/ou la grandeur de réglage (Y(n)) est/sont lu(es) d'après un champ de caractéristiques.

**15.** Procédé selon l'une des revendications 1 à 13, **caractérisé en ce que** la grandeur de réglage (Y) et/ou le temps d'attente ($T_w$) est/sont calculé(es) au moyen d'une logique floue, avec les étapes consistant à :

- définir des termes linguistiques chaque fois pour les grandeurs (e, de) servant de base pour les calculs de la grandeur de réglage ou du temps d'attente, ainsi que pour la grandeur de réglage (Y) ou le temps d'attente ($T_w$) ;
- définir des fonctions d'appartenance pour chacun des termes linguistiques;
- pour chaque grandeur, déterminer les valeurs d'appartenance à chaque terme concerné;
- introduire les valeurs d'appartenance dans une base de règle (21) qui combine les termes linguistiques des grandeurs d'entrée aux termes linguistiques des grandeurs de réglage (Y) ou du temps d'attente ($T_w$), et calcul d'une fonction d'appartenance pour la grandeur de réglage (Y) ou le temps d'attente ($T_w$); et
- défuzzifier la grandeur de réglage ou le temps d'attente ,d'après leur fonction d'appartenance.

**16.** Procédé selon l'une des revendications précédentes, **caractérisé en ce que** la grandeur de réglage (Y) et la puissance d'entraînement fournies à un dispositif de chauffage à ébullition du groupe de refroidissement par absorption (2) dans un réfrigérateur (2, 3, 4), la grandeur de sortie (X) et la température ambiante intérieure de l'enceinte de refroidissement (3), et la valeur de consigne (w) est un paramètre de consigne, préréglable, de la température ambiante intérieure.

**17.** Procédé selon la revendication 16 ainsi que dépendant de la revendication 9, **caractérisé en ce que** la détection du temps mort ($T_{mort}$) et/ou du temps de retardement ($T_v$) est effectuée après un processus de dégivrage.

**18.** Régulateur pour la mise en oeuvre de la procédé selon l'une des revendications précédentes comportant:

- un dispositif (5) pour mesurer la grandeur de sortie (X) du processus;
- un dispositif de réglage (6) pour prérégler la valeur de consigne (w);
- un microprocesseur comprenant une mémoire de travail et une mémoire de programme pour recevoir un écart sur valeur de consigne (e) et pour calculer et fournir une valeur réelle de la grandeur de réglage (Y);
- un dispositif pour introduire la grandeur de réglage dans le processus;
- un minuteur (1b), réalisé pour calculer un temps d'attente ($T_w$) variable, pendant lequel la grandeur de réglage n'est pas modifiée;

**caractérisé par** :

- une mémoire (1c) pour une grandeur de réglage (Y) calculée antérieurement;
- le minuteur (1b) étant réalisé pour recevoir la valeur antérieurement calculée de la grandeur de réglage et la valeur réelle de la grandeur de réglage, pour calculer le temps d'attente ($T_w$) en fonction de leur différence et, après écoulement de ce temps d'attente, déclencher un nouveau calcul d'une valeur de la grandeur de réglage (Y) par le microprocesseur.

**19.** Régulateur selon la revendication 18, **caractérisé par** un dispositif pour calculer la différence entre la grandeur de réglage (Y) calculée antérieurement, mémorisée, et la valeur calculée actuelle de la grandeur de réglage (Y); le minuteur (1b) étant réalisé pour calculer le temps d'attente ($T_w(n)$) en fonction de cette différence.

**20.** Régulateur selon la revendication 19, **caractérisé en ce que** le minuteur (1b) est réalisé pour attribuer un premier temps d'attente ($T_{w1}$), lorsque la valeur de la différence entre la valeur antérieure et la valeur actuelle de la grandeur de réglage est inférieure à une valeur prédéterminée, et allouer un deuxième temps d'attente ($T_{w2}$) supérieur, lorsque la valeur de cette différence est supérieure à la valeur seuil.

**21.** Régulateur selon la revendication 18, 19 ou 20 **caractérisé en ce que** le minuteur (1b) est réalisé pour calculer le temps d'attente ($T_w$) en fonction d'un temps mort ($T_{mort}$) et/ou d'un temps de retardement ($T_v$) du processus.

**22.** Régulateur selon l'une des revendications 18 à 21, **caractérisé en ce que**

- le dispositif de mesure de la grandeur de sortie (Y) du processus comprend un capteur de température d'air (5) et un convertisseur analogique/numérique, et
- le dispositif d'introduction de la grandeur de réglage dans le processus comprend un organe de réglage pour régler la puissance à fournir au processus.

**23.** Régulateur selon l'une des revendications 18 à 22, **caractérisé par**

- un dispositif (1d) pour appréhender la variation temporelle de la grandeur de sortie et introduire la valeur de modification appréhendée dans le microprocesseur.

24. Régulateur selon l'une des revendications 18 à 22, **caractérisé en ce qu'**une mémoire à champ de caractéristiques est prévue, pour effectuer le calcul de la grandeur de réglage (Y) et/ou du temps d'attente ($T_w$).

25. Régulateur selon la revendication 23, **caractérisé par**

- des dispositifs (20a) pour fuzzifier un écart de la grandeur de sortie (X) par rapport à la valeur de consigne (w) préréglée;
- des dispositifs (20b) pour fuzzifier la valeur de modification (de) appréhendée;
- des dispositifs (20c) pour fuzzifier la valeur de réglage antérieurement calculée;
- des dispositifs (21) pour mémoriser des règles de logique floue à utiliser par le microprocesseur; et
- des dispositifs (22) pour défuzzifier une quantité floue, fournie par le microprocesseur, de la grandeur de sortie (X).

## Fig. 1a

$$a(1-e^{-\frac{(t-T_{tot})}{T_v}})$$

VERLAUF VON X

$T_{tot}$    $t_{tot}$

X

t

## Fig. 1b

Y

t

## Fig. 2

3

VERD.

4

5

X

6

REGLER

Y

1

W

KÜHLAGGR.

2

# Fig. 3

```
START ──── S0
  │
  ▼
Tv MESSEN,SPEICHERN ──── S1
  │
  ▼
e(n),de(n) ERFASSEN ──── S2
  │
  ▼
Y BERECHNEN ──── S3
  │
  ▼
Y SPEICHERN ──── S4
  │
  ▼
Tw BERECHNEN ──── S5
  │
  ▼
WARTEN ──── S6
  │
  ▼
KÜHLEN  ◇ ──── S7
  │
ABTAUEN
  │
  ▼
Y=0 ──── S8
  │
  ▼
WARTEN ──── S9
  │
  ▼
Y=_⌐ ──── S10
```

## Fig. 4

## Fig. 5

## Fig. 6

## Fig. 7